# EUROPEAN PATENT SPECIFICATION

(11) **EP 1 379 613 B1**
(45) Date of publication and mention of the grant of the patent: **14.12.2005**
(21) Application number: 02720513.7
(22) Date of filing: 19.04.2002
(51) Int. Cl.: C10J 3/00

(54) **GASIFICATION AND SLAGGING COMBUSTION SYSTEM**
VERGASUNGS- UND VERSCHLACKUNGSVORRICHTUNG
SYSTEME DE COMBUSTION PAR GAZEIFICATION ET SCORIFICATION

(30) Priority: 19.04.2001 JP 2001121386
(43) Date of publication of application: 14.01.2004
(73) Proprietor: EBARA CORPORATION, Ohta-ku, Tokyo 144-8510 (JP)
(72) Inventor: ISHIKAWA, Ryuichi Ebara Corporation, Tokyo 144-8510 (JP); ENDO, Hidekazu Ebara Corporation, Tokyo 144-8510 (JP)
(74) Representative: Wagner, Karl H.
(86) International application number: PCT/JP2002/003904
(87) International publication number: WO 2002/086027

(56) References cited:
- EP-A- 0 389 311
- EP-A- 0 926 441
- CH-A- 452 094
- DE-U- 8 628 635
- GB-A- 2 140 144
- US-A- 3 477 203
- US-A- 4 080 910
- US-A- 5 257 585

## Description

### Technical Field

The present invention relates to a waste treatment system for treating wastes including municipal wastes, industrial wastes, biomass wastes, medical wastes, automobile wastes such as waste tires or shredder dust, and the like, and more particularly to a gasification and slagging combustion system in which the above wastes are gasified to produce combustible gas in a gasification furnace, and the produced combustible gas is combusted together with unburned carbon accompanied by the produced combustible gas to generate ash or molten slag in a high-temperature incinerator or a slagging combustion furnace.

### Background Art

At present, primary objectives that are being pursued in the waste incineration treatment are the following:
1) The amount of ash discharged from the incineration treatment facility should be reduced.
2) Harmful substances such as dioxins contained in the exhaust gas (combustion gas) discharged from the incineration treatment facility should be decomposed so as to be harmless.

As one of the efforts that are being made to achieve the above objectives, there is a gasification and slagging combustion technology in which wastes are gasified to produce combustible gas in a gasification furnace, and the combustible gas produced in the gasification furnace is combusted and ash contained in the combustible gas is melted at a high temperature to produce slag in a slagging combustion furnace.

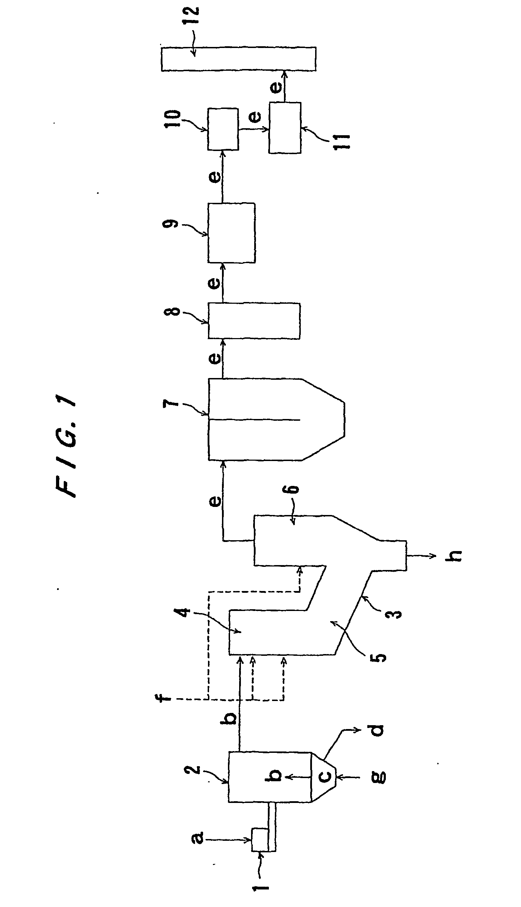

FIG. 1 of the accompanying drawings schematically shows essential elements of a conventional gasification and slagging combustion system having a waste heat boiler. As shown in FIG. 1, the conventional gasification and slagging combustion system comprises a waste supply device 1, a fluidized-bed gasification furnace 2, and a swirling-type slagging combustion furnace 3 having a primary combustion chamber 4, a secondary combustion chamber 5, and a tertiary combustion chamber 6. The gasification and slagging combustion system further comprises a waste heat boiler 7, an economizer 8, a bag filter 9, an exhaust gas reheater 10, a catalytic reaction tower 11, and a stack 12.

The conventional gasification and slagging combustion system shown in FIG. 1 operates as follows: Wastes a supplied from the waste supply device 1 into the fluidized-bed gasification furnace 2 are pyrolyzed and gasified to produce combustible gas b in a fluidized bed where a fluidized medium c (such as sand) is fluidized by fluidizing air g introduced from a bottom of the fluidized-bed gasification furnace 2. The combustible gas b produced in the fluidized-bed gasification furnace 2 is introduced into the swirling-type slagging combustion furnace 3. In the swirling-type slagging combustion furnace 3, the produced combustible gas b is mixed with combustion air f in the primary combustion chamber 4 and combusted at a high temperature of about 1350°C in the primary and secondary combustion chambers 4 and 5 to combust char contained in the produced combustible gas b, thus melting ash contained in the char. The produced gas b is further mixed with combustion air f in the tertiary combustion chamber 6 and combusted therein to generate exhaust gas e. The exhaust gas e having a high temperature of about 1350°C is then introduced into the waste heat boiler 7. Incombustibles d which are contained in the wastes a and are not gasified are discharged from the lower part of the fluidized bed in the fluidized-bed gasification furnace 2 to the outside. The ash melted in the swirling-type slagging combustion furnace 3 is discharged as molten slag *h* from the swirling-type slagging combustion furnace 3 to the outside.

The high-temperature exhaust gas e passes successively through the waste heat boiler 7 and the economizer 8, and thus is cooled. The cooled exhaust gas e is introduced into the bag filter 9 where dust such as fly ash contained in the exhaust gas e is removed. Then, the exhaust gas e is preheated to a temperature enough to cause a catalytic reaction. NOx and SOx contained in the exhaust gas e are removed through a reaction with ammonia in the catalytic reaction tower 11, and then the exhaust gas e is discharged from the stack 12 into the atmosphere. On the other hand, steam produced in the waste heat boiler 7 is supplied to a steam turbine (not shown) coupled to a generator (not shown) to generate electric power. The generated electric power is used for operating various equipment in the gasification and slagging combustion system to save energy and also to reduce the running cost.

The wastes a which are treated in the gasification and slagging combustion system contain various components. Although the ash is removed as molten slag *h* in the swirling-type slagging combustion furnace 3, some metals having a low melting point and salts contained in the wastes are vaporized at a high temperature, and discharged from the swirling-type slagging combustion furnace 3 in a vaporized state together with the exhaust gas *e*. Therefore, such metals and salts are generated again as viscous ash in a cooling process by the waste heat boiler 7, the economizer 8, and the like, and are liable to be adhered to the contact-regions, contacted by the exhaust gas e, in the waste heat boiler 7 and the economizer 8, and molten salts are liable to be produced to cause corrosion of such contact-regions. This ash is remarkably different from the ash produced in the conventional incinerator in terms of high viscosity and high concentration of salts. Thus, the performance of the waste heat boiler 7 and the economizer 8 is liable to be lowered, break or damage of boiler tubes is liable to occur, clogging of the economizer is liable to occur due to dust, or other malfunction might occur.

The document EP-A-0 926 441 discloses a two-stage gasification system comprising a low-temperature gasification furnace and a high-temperature gasification furnace. In the two-stage gasification system, wastes are gasified in the low-temperature gasification furnace (fluidized-bed furnace) to produce a gas and char, and the produced gas and char are introduced into the high-temperature gasification furnace (melting furnace) and combusted by supplying oxygen in the high-temperature gasification furnace (melting furnace), thereby reforming the gas at a high-temperature by partial oxidization to produce a combustible gas. The char and ash content contained in the gas are melted at a high temperature to form molten slag.

The document EP-A-0 389 311 discloses a combustion apparatus in which a gas is completely mixed with an exhaust discharged from a melting furnace to protect a furnace wall surface of the melting furnace.

### Disclosure of Invention

The present invention has been made in view of the above drawbacks. It is therefore an object of the present invention to provide gasification and slagging combustion system and method which can prevent dust from being adhered or attached to contact-regions, contacted by exhaust gas (combustion gas), of equipment (particularly a waste heat boiler and an economizer) disposed downstream of a swirling-type slagging combustion furnace for thereby preventing such contact-regions from being corroded by molten salts.

In order to achieve the above object of the present invention, according to an aspect of the present invention, there is provided a gasification and slagging combustion system comprising: a gasification furnace for gasifying wastes to produce combustible gas; a high-temperature combustor for combusting the combustible gas produced in the gasification furnace to generate combustion gas and melting ash content contained in the combustible gas at a high temperature to produce molten slag; a waste heat boiler for recovering heat of the combustion gas discharged from the high-temperature combustor; and a cooling device for cooling the combustion gas before the combustion gas is introduced into the waste heat boiler, wherein said cooling device comprises a supply device for spraying a waste liquid produced by dehydration of the wastes into the combustion gas before the combustion gas is introduced into the waste heat boiler.

With the above arrangement, since a waste liquid produced by dehydration of the wastes is sprayed into the high-temperature combustion gas before the high-temperature combustion gas is introduced into the waste heat boiler, the high-temperature combustion gas before it is introduced into the waste heat boiler can easily be cooled to a predetermined temperature or lower for preventing dust from being adhered or attached to the contact-regions, contacted by the exhaust gas, of the waste heat boiler and equipment disposed downstream of the waste heat boiler, thus preventing such contact-regions from being corroded by molten salts. In addition, the waste liquid can be simultaneously treated by way of evaporation and oxidization.

According to a preferred aspect of the present invention, the high-temperature combustor comprises one of an incinerator and a slagging combustion furnace.

According to the present invention, a cooling device is provided to cool combustion gas having a high temperature of about 1350°C to a predetermined temperature of 1000°C or lower, preferably 900 °C or lower, before the high-temperature combustion gas is introduced into the waste heat boiler; for preventing dust from being adhered or attached, to the contact-regions, contacted by exhaust gas, of the waste heat boiler and equipment disposed downstream of the waste heat boiler for thereby preventing such contact-regions from being corroded by molten salts. Specifically, because the high-temperature combustion gas is cooled before it is introduced into the waste heat boiler, dust is prevented from being adhered to the contact-regions, contacted by exhaust gas, of the waste heat boiler and equipment disposed downstream of the waste heat boiler, and hence molten salts are not generated in such contact-regions to thus prevent such contact-regions from being corroded by molten salts. Further, the temperature of the exhaust gas at the outlet of the boiler is prevented from increasing, and the quantity of heat generated in the boiler is prevented from decreasing. Since such contact-regions of the waste heat boiler and equipment disposed downstream of the waste heat boiler are prevented from being corroded, the amount of the material removed from water tubes of the boiler is reduced drastically.

According to a preferred aspect of the present invention, the cooling device comprises a spray device for spraying cooling water into the combustion gas before the combustion gas is introduced into the waste heat boiler.

According to a preferred aspect of the present invention, the cooling device comprises an introduction device for introducing cooling air into the combustion gas before the combustion gas is introduced into the waste heat boiler.

With the above arrangement, since cooling water is sprayed or cooling air is introduced into the high-temperature combustion gas before the high-temperature exhaust gas is introduced into the waste heat boiler, the high-temperature combustion gas before it is introduced into the waste heat boiler can easily be cooled to a predetermined temperature or lower for preventing dust from being adhered or attached to the contact-regions, contacted by exhaust gas, of the waste heat boiler and equipment disposed downstream of the waste heat boiler, thus preventing such contact-regions from being corroded by molten salts.

According to a preferred aspect of the present invention, the cooling device comprises an introduction device for introducing a low-temperature exhaust gas downstream of the waste heat boiler into the combustion gas before the combustion gas is introduced into the waste heat boiler.

According to a preferred aspect of the present invention, the wastes comprises wastes containing a large amount of salts.

With the above arrangement, since low-temperature exhaust gas downstream of the waste heat boiler is introduced into the high-temperature combustion gas before the high-temperature combustion gas is introduced into the waste heat boiler, the high-temperature, combustion gas before it is introduced into the waste heat boiler can easily be cooled to a predetermined temperature or lower for preventing dust from being adhered or attached to the contact-regions, contacted by exhaust gas, of the waste heat boiler and equipment disposed downstream of the waste heat boiler, thus preventing such contact-regions from being corroded by molten salts. Since the exhaust gas is circulated and used, the amount of the exhaust gas is not increased, the quantity of heat carried out by the exhaust gas remains unchanged, and the quantity of heat recovered by the waste heat boiler is not lowered.

According to another aspect of the present invention, there is provided a gasification and slagging combustion method comprising: gasifying wastes to produce combustible gas in a gasification furnace; combusting the combustible gas to generate combustion gas and melting ash content contained in the combustible gas at a high temperature to produce molten slag in a high-temperature combustor; recovering heat of the combustion gas discharged from the high-temperature combustor in a waste heat boiler; and cooling the combustion gas before the combustion gas is introduced into the waste heat boiler.

According to the present invention, the high-temperature combustion gas is cooled to a predetermined temperature of 1000°C or lower, preferably 900°C or lower, before the high-temperature combustion gas is introduced into the waste heat boiler, for preventing dust from being adhered or attached to the contact-regions, contacted by exhaust gas, of the waste heat boiler and equipment disposed downstream of the waste heat boiler for thereby preventing such contact-regions from being corroded by molten salts.

The above and other objects, features, and advantages of the present invention will become apparent from the following description when taken in conjunction with the accompanying drawings which illustrate preferred embodiments of the present invention by way of example.

### Brief Description of Drawings

FIG. 1 is a schematic diagram of essential elements of a conventional gasification and slagging combustion system having a waste heat boiler;
FIG. 2 is a schematic diagram of essential elements of a gasification and slagging combustion system having a waste heat boiler according to an embodiment of the present invention;
FIG. 3 is a schematic diagram of essential elements of a gasification and slagging combustion system having a waste heat boiler according to another embodiment of the present invention;
FIG. 4 is a schematic diagram of essential elements of a gasification and slagging combustion system having a waste heat boiler according to still another embodiment of the present invention; and
FIG. 5 is a schematic diagram of essential elements of a gasification and slagging combustion system having a waste heat boiler according to still another embodiment of the present invention.

### Best Mode for Carrying Out the Invention

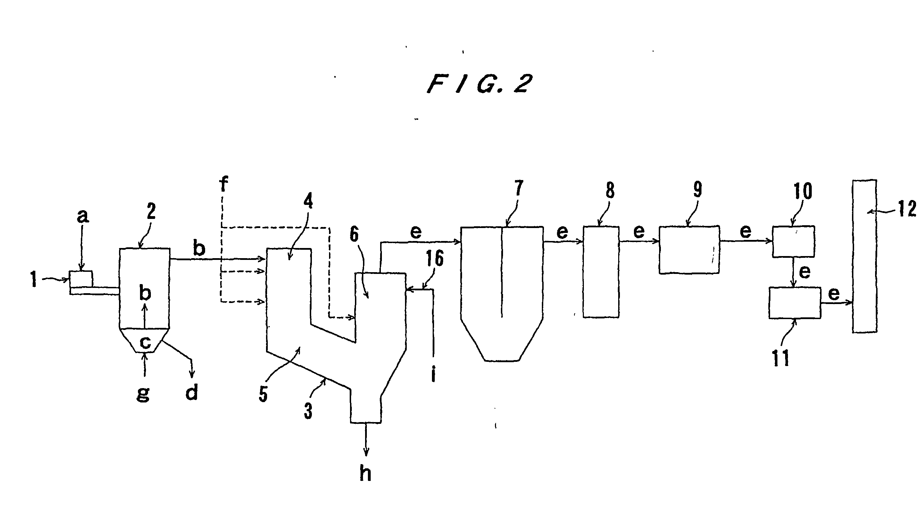

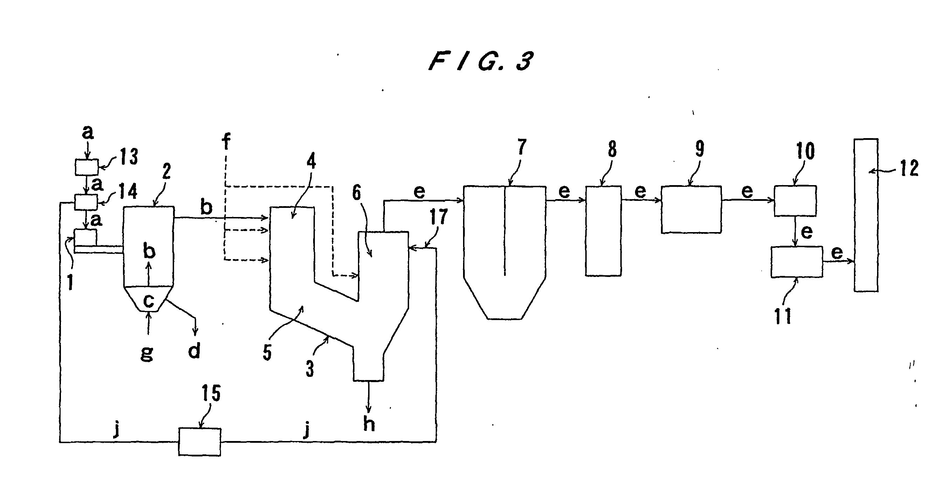

A gasification and slagging combustion system according to embodiments of the present invention will be described with reference to the drawings. Those parts in the gasification and slagging combustion system shown in FIGS. 2 through 5 which are identical to those in the conventional gasification and slagging combustion system shown in FIG. 1 are denoted by identical reference numerals, and will not be described in detail below.

FIG. 2 shows a gasification and slagging combustion system having a waste heat boiler according to an embodiment of the present invention. In the gasification and slagging combustion system shown in FIG. 2, cooling water is sprayed into high-temperature combustion gas to cool the high-temperature combustion gas before the high-temperature combustion gas is introduced into the waste heat boiler. Specifically, as shown in FIG. 2, water spray nozzles 16 for spraying cooling water into the tertiary combustion chamber 6 are mounted on the swirling-type slagging combustion furnace 3.

The water spray nozzles 16 spray cooling water i into the high-temperature exhaust gas (combustion gas) e in the tertiary combustion chamber 6 to cool the high-temperature exhaust gas e to be introduced into the waste heat boiler 7. Thus, the exhaust gas e led to the waste heat boiler 7 is cooled to a predetermined temperature or lower enough to prevent dust from being adhered or attached to the contact-regions, contacted by the exhaust gas e, in the waste heat boiler 7 and the economizer 8 for thereby preventing such contact-regions from being corroded by molten salts. Specifically, the combustion gas e having a high temperature of about 1350°C is cooled to a temperature of 1000°C or lower, preferably 900°C or lower. Thus, dust is prevented from being adhered to the contact-regions, contacted by the exhaust gas e, in the waste heat boiler 7 and the economizer 8, and hence such contact-regions are prevented from being corroded by molten salts. Details of operation of the other equipment in the gasification and slagging combustion system shown in FIG. 2 are the same as those in the conventional gasification and slagging combustion system shown in FIG. 1, and will not be described below.

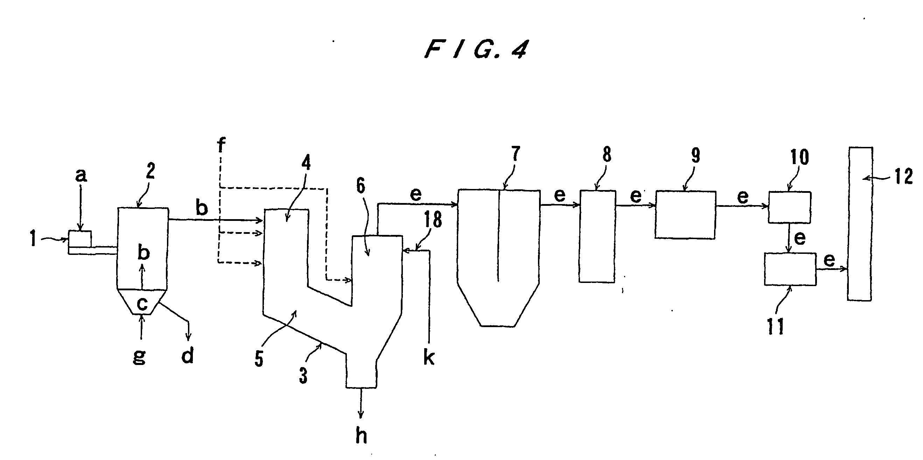

FIG. 3 shows a gasification and slagging combustion system having a waste heat boiler according to another embodiment of the present invention. In the gasification and slagging combustion system shown in FIG. 3, a waste liquid produced by dehydration of the wastes is sprayed into the high-temperature combustion gas to cool the combustion gas before the combustion gas is introduced into the waste heat boiler. Specifically, as shown in FIG. 3, the gasification and slagging combustion system additionally has a waste crusher 13 for crushing the wastes, a waste dehydrator 14 for dehydrating the wastes, and a solid material removing device 15 such as a centrifugal dehydrator for removing a solid material contained in the waste liquid.

In the gasification and slagging combustion system, before the wastes a are supplied to the fluidized-bed gasification furnace 2, the wastes a are crushed by the waste crusher 13, and then dehydrated by the waste dehydrator 14. The wastes a from which water content is removed are supplied from the waste supply device 1 to the fluidized-bed gasification furnace 2. A waste liquid j produced by dehydration is delivered to the solid material removing device 15 in which a solid material contained in the waste liquid j is removed. The waste liquid j is then sprayed from waste liquid spray nozzles 17 mounted on the swirling-type slagging combustion furnace 3 into the tertiary combustion chamber 6. Thus, the exhaust gas (combustion gas) e to be introduced into the waste heat boiler 7 is cooled to a predetermined temperature or lower, and the waste liquid j is treated by way of evaporation and oxidization. In the solid material removing device 15, the solid material is removed from the waste liquid j for the purpose of preventing the waste liquid spray nozzles 17 from being clogged. The particles of the waste liquid j sprayed from the waste liquid spray nozzles 17 should be as small as possible.

In the above process of cooling the combustion gas using the latent heat of a liquid such as the cooling water i (see FIG. 2) or the waste liquid j (see FIG. 3), if the waste liquid j is obtained by dehydration of the wastes a, it is desirable to spray the waste liquid j because the waste liquid j can be simultaneously treated by way of evaporation and oxidization. If a cooling gas is added to the combustion gas to cool the combustion gas as described below, then equipment is larger in size because the amount of the gas increases. However, in the case where the latent heat of a liquid is utilized to cool the combustion gas as described above, equipment is not required to be larger in size because the amount of the gas is not changed so much. If the cooling method of utilizing the latent heat of a liquid and the cooling method of adding a cooling gas are compared, it is preferable to use the latent heat of a liquid.

FIG. 4 shows a gasification and slagging combustion system having a waste heat boiler according to still another embodiment of the present invention. In the gasification and slagging combustion system shown in FIG. 3, air is added to the high-temperature combustion gas to cool the combustion gas before the combustion gas is introduced into the waste heat boiler. Specifically, air blowing nozzles 18 for blowing air into the tertiary combustion chamber 6 are mounted on the swirling-type slagging combustion furnace 3. The air blowing nozzles 18 blow air into the high-temperature exhaust gas (combustion gas) e in the tertiary combustion chamber 6 to cool the high-temperature exhaust gas e to be introduced into the waste heat boiler 7 to a predetermined temperature or lower.

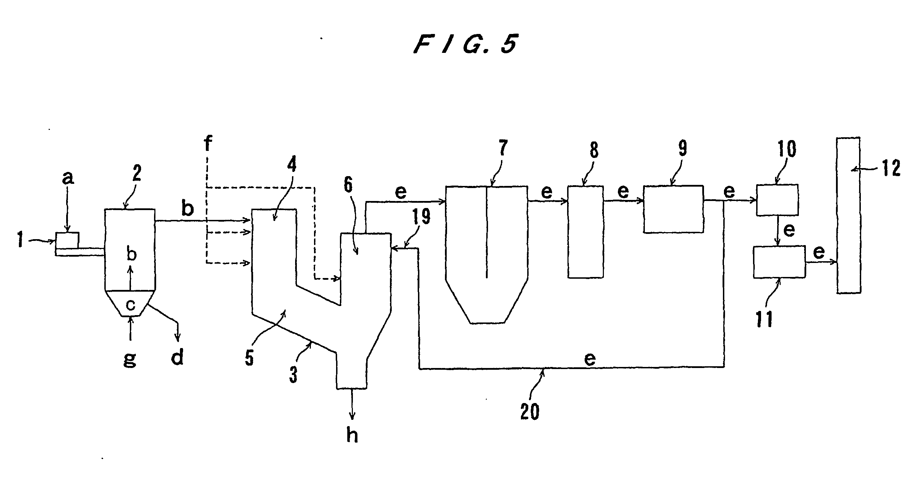

FIG. 5 shows a gasification and slagging combustion system having a waste heat boiler according to still another embodiment of the present invention. In the gasification and slagging combustion system shown in FIG. 5, the exhaust gas e whose temperature has been lowered is circulated and injected into the high-temperature exhaust gas e to cool the high-temperature exhaust gas before the high-temperature exhaust gas is introduced into the waste heat boiler. Specifically, exhaust gas injection nozzles 19 for injecting the exhaust gas e into the tertiary combustion chamber 6 are mounted on the swirling-type slagging combustion furnace 3.

A part of the exhaust gas e having a lowest temperature ranging from 160°C to 170°C which has been discharged from the bag filter 9 is circulated, without being introduced into the exhaust gas preheater 10, through an exhaust gas circulation path 20 and injected from an exhaust gas injection nozzle 19 into the high-temperature exhaust gas e in the tertiary combustion chamber 6. Thus, the exhaust gas e is cooled to a predetermined temperature or lower before it is introduced into the waste heat boiler 7. In this case, because the exhaust gas from which salts and dust have been removed is utilized as a cooling gas, concentration of salts does not occur.

In the above process of cooling the high-temperature combustion gas by adding a cooling gas such as the air k (see FIG. 4) or the exhaust gas e (see FIG. 5), in order to prevent the amount of the gas from increasing, it is preferable to recirculate the exhaust gas e from which dust has been removed. In this case, although the amount of the exhaust gas e flowing from the waste heat boiler 7 to the bag filter 9 is increased, the amount of the gas discharged from the stack 12 remains unchanged. In the above process of cooling the combustion gas using the latent heat of a liquid such as the cooling water i (see FIG. 2) or the waste liquid j (see FIG. 3), the quantity of heat recovered by the waste heat boiler 7 is lowered by an amount corresponding to the latent heat. However, in the process of cooling the combustion gas by utilizing circulation of the exhaust gas e (see FIG. 5), the quantity of heat carried out by the exhaust gas e remains unchanged, and the quantity of heat recovered by the waste heat boiler 7 is not lowered. To be more specific, in this cooling process, because there is no loss of the latent heat of a liquid, with respect to the quantity of heat which is not recovered and is discharged as latent heat, there is no difference between the system to which this cooling process is applied and the system to which this cooling process is not applied.

In the above embodiments, the produced gas b discharged from the fluidized-bed gasification furnace is combusted at a high temperature in the swirling-type slagging combustion furnace 3. However, the principles of the present invention are applicable to a process of combusting the produced gas b in a high-temperature incinerator. Furthermore, although the fluidized-bed gasification furnace 2 is used as a gasification furnace, the gasification furnace is not limited to the fluidized-bed gasification furnace.

Further, in all of the above embodiments, the high temperature combustion gas which has a temperature of 700°C or higher, preferably 800°C or higher before the high temperature combustion gas enters the waste heat boiler is desirable for the purpose of heat recovery and corrosion prevention.

Further, the effect of the present invention is remarkable depending on the kind of the wastes, or quality or amount of the wastes. The mechanism of corrosion of material caused by exhaust gas is as follows: Corrosive salts are generated in the exhaust gas, and these corrosive salts are brought into contact with a metal surface at a temperature ranging from 600 to about 700°C to produce salts having a low melting point, and corrosive reaction between the salts having a low melting point and the metal surface is accelerated. In this mechanism, in the case where wastes containing a large amount of salts such as shredder dust or material containing halide as a main component are treated, particularly this corrosion of material is problematic. This is because a large amount of chemical species (for example, material containing element such as Cl, S, K and Na) which become a corrosion source are contained in the wastes by nature. That is, the exhaust gas generated by combustion contains salts having a high concentration. Therefore, if the exhaust gas has a temperature ranging from 600 to about 700°C under the presence of dust (this condition is favorable to generation of corrosive salts), generation of corrosive salts progresses easily, because a large amount of reactive chemical species are present in the exhaust gas. Thus, corrosive salts are adhered or attached to the metal surface, and reaction for producing salts having a low melting point is liable to progress easily. Further, these salts-having a low melting point are liable to be attached to and deposited on the metal surface, and hence these salts having a low melting point contribute largely to corrosion of material. Specifically, if the wastes contain a large amount of salts by nature, salts having a low melting point such as K₃Fe(SO₄)₃, K₂SO₄, or Na₃Fe (SO₄)₃ tend to be generated, and hence corrosion is liable to be generated on the metal surface. In all of the above embodiments, when the wastes containing a large amount of salts such as shredder dust are treated, the effect of prevention of corrosion in the present invention is remarkable, compared with the case in which the present invention is not applied.

According to the present invention, the following excellent effects can be obtained.
1) A cooling device is provided to cool combustion gas having a high temperature of about 1350°C to a predetermined temperature of 1000°C or lower, preferably 900°C or lower, before the high-temperature combustion gas is introduced into the waste heat boiler, for preventing dust from being adhered to the contact-regions, contacted by exhaust gas, of the waste heat boiler and equipment disposed downstream of the waste heat boiler for thereby preventing such contact-regions from being corroded by molten salts. As a result, the gasification and slagging combustion system can be stably operated continuously, and the equipment thereof has a longer service life.
2). Since a waste liquid produced by dehydration of the wastes is sprayed into the high-temperature combustion gas before the high-temperature combustion gas is introduced into the waste heat boiler, and the high-temperature combustion gas before it is introduced into the waste heat boiler is cooled to a predetermined temperature or lower, the waste liquid can be simultaneously treated by way of evaporation and oxidization.
3) Since exhaust gas which has been cooled by equipment such as a waste heat boiler or equipment of the waste heat boiler is introduced into the high-temperature combustion gas before the high-temperature combustion gas is introduced into the waste heat boiler, and the high-temperature combustion gas before it is introduced into the waste heat boiler is cooled to a predetermined temperature or lower, the amount of the exhaust gas is not increased, the quantity of heat carried out by the exhaust gas remains unchanged, and the quantity of heat recovered by the waste heat boiler is not lowered.

Although certain preferred embodiments of the present invention have been shown and described in detail, it should be understood that various changes and modifications may be made therein without departing from the scope of the appended claims.

### Industrial Applicability

The present invention is applicable to a gasification and slagging combustion system in which wastes including municipal wastes, industrial wastes, biomass wastes, medical wastes, automobile wastes such as waste tires or shredder dust, and the like are gasified to produce combustible gas, and the produced combustible gas is combusted together with unburned carbon accompanied by the combustible gas to form molten slag in a high-temperature slagging combustion furnace.

## Claims

1. A gasification and slagging combustion system comprising:
a gasification furnace (2) for gasifying wastes to produce combustible gas;
a high-temperature combustor (3) for combusting said combustible gas produced in said gasification furnace (2) to generate combustion gas and
melting ash content contained in said combustible gas at a high temperature to produce molten slag (h);
a waste heat boiler (7) for recovering heat of said combustion gas discharged from said high-temperature combustor (3); and
a cooling device for cooling said combustion gas before said combustion gas is introduced into said waste heat boiler (7);
wherein said cooling device comprises a supply device for spraying a waste liquid (j) produced by dehydration of said wastes into said combustion gas before said combustion gas is introduced into said waste heat boiler.

2. A gasification and slagging combustion system according to claim 1,
wherein said high-temperature combustor (3) comprises one of an incinerator and a slagging combustion furnace.

3. A gasification and slagging combustion system according to claim 1,
wherein said wastes comprise wastes containing a large amount of salts.

4. A gasification and slagging combustion method comprising:
gasifying wastes to produce combustible gas in a gasification furnace (2);
combusting said combustible gas to generate combustion gas and melting ash content contained in said combustible gas at a high temperature to produce molten slag (h) in a high-temperature combustor (3);
recovering heat of said combustion gas discharged from said high-temperature combustor (3) in a waste heat boiler (7); and
cooling said combustion gas by spraying a waste liquid (j) produced by dehydration of said wastes into said combustion gas from a supply device before said combustion gas is introduced into said waste heat boiler.

5. A gasification and slagging combustion method according to claim 4,
wherein said high-temperature combustor (3) comprises one of an incinerator and a slagging combustion furnace.

6. A gasification and slagging combustion method according to claim 4,
wherein said wastes comprise wastes containing a large amount of salts.

## Patentansprüche

1. Ein Vergasungs- und Verschlackungsverbrennungssystem, welches Folgendes aufweist:
einen Vergasungsofen (2) zum Vergasen von Abfällen zur Erzeugung von brennbarem Gas;
eine Hochtemperaturverbrennungsvorrichtung (3) zum Verbrennen des brennbaren Gases, erzeugt in dem Vergasungsofen (2), um Verbrennungsgas zu erzeugen, und Schmelzen des Aschegehalts, enthalten in dem Verbrennungsgas bei einer hohen Temperatur zur Erzeugung von geschmolzener Schlacke (h);
einen Abwärmekessel (7) zur Wiedergewinnung von Wärme des Verbrennungsgases, abgegeben von der Hochtemperaturverbrennungsvorrichtung (3); und
eine Kühlvorrichtung zum Kühlen des Verbrennungsgases bevor das Verbrennungsgas in den Abwärmekessel (7) eingegeben wird;
wobei die Kühlvorrichtung eine Liefervorrichtung aufweist, um eine Abfallflüssigkeit (j), erzeugt durch Dehydrieren der Abfälle, in das Verbrennungsgas zu sprühen, bevor das Verbrennungsgas in den Abwärmekessel eingeführt wird.

2. Ein Vergasungs- und Verschlackungsverbrennungssystem nach Anspruch 1, wobei die Hochtemperaturverbrennungsvorrichtung (3) einen Verbrennungs- oder einen Schlackeverbrennungsofen aufweist.

3. Ein Vergasungs- und Verschlackungsverbrennungssystem nach Anspruch 1, wobei die Abfälle eine große Menge von Salz enthaltenden Abfällen aufweisen.

4. Ein Vergasungs- und Verschlackungsverbrennungsverfahren, welches Folgendes vorsieht:
Vergasen der Abfälle zur Erzeugung eines brennbaren Gases in einem Vergasungsofen (2);
Verbrennen des brennbaren Gases zur Erzeugung von Verbrennungsgas und Schmelzen des Aschegehalts, enthalten in dem brennbaren Gas bei einer hohen Temperatur, zur Erzeugung geschmolzener Schlacke (h) in einer Hochtemperaturverbrennungsvorrichtung (3);
Wiedergewinnen der Wärme des erwähnten Verbrennungsgases, abgegeben von der Hochtemperaturverbrennungsvorrichtung (3), und zwar in einem Abwärmekessel (7); und
Kühlen des erwähnten Verbrennungsgases dadurch, dass eine Abfallflüssigkeit (j), erzeugt durch Dehydrieren der Abfälle, in dem Verbrennungsgas von einer Liefervorrichtung, bevor das erwähnte Verbrennungsgas in den Abwärmekessel eingeführt wird.

5. Ein Vergasungs- und Verschlackungsverbrennungsverfahren nach Anspruch 4, wobei die Hochtemperaturverbrennungsvorrichtung (3) eine Verbrennungsvorrichtung oder einen Schlackeverbrennungsofen aufweist.

6. Ein Vergasungs- und Verschlackungsverbrennungsverfahren nach Anspruch 4, wobei die Abfälle eine große Menge an Salz enthaltenden Abfällen umfassen.

## Revendications

1. Système de combustion par gazéification et scorification comprenant :
un four (2) de gazéification pour gazéifier des déchets pour produire un gaz combustible ; une chambre de combustion (3) à température élevée pour brûler ledit gaz combustible produit dans ledit four (2) de gazéification pour générer un gaz de combustion et mélanger une teneur en cendre contenue dans ledit gaz combustible à un niveau de température élevée pour produire un laitier (h) en fusion ;
une chaudière (7) de récupération de chaleur pour récupérer une chaleur dudit gaz de combustion évacué de ladite chambre de combustion (3) à température élevée ; et
un dispositif de refroidissement pour refroidir ledit gaz de combustion avant que ledit gaz de combustion ne soit introduit dans ladite chaudière (7) de récupération de chaleur ;
dans lequel ledit dispositif de refroidissement comprend un dispositif d'alimentation pour vaporiser un déchet liquide (j) produit par déshydratation desdits déchets en ledit gaz de combustion avant que ledit gaz de combustion ne soit introduit dans ladite chaudière de récupération de chaleur.

2. Système de combustion par gazéification et scorification selon la revendication 1, dans lequel ladite chambre de combustion (3) à température élevée comprend l'un parmi un incinérateur et un four à combustion par scorification.

3. Système de combustion par gazéification et scorification selon la revendication 1, dans lequel lesdits déchets comprennent des déchets contenant une grande quantité de sels.

4. Procédé de combustion par gazéification et scorification comprenant :
une gazéification des déchets pour produire un gaz combustible dans un four (2) de gazéification ; brûler ledit gaz combustible pour générer un gaz de combustion et mélanger la teneur en cendre contenue dans ledit gaz combustible à un niveau de température élevée pour produire un laitier (h) en fusion dans une chambre de combustion (3) à température élevée ;
récupérer une chaleur dudit gaz de combustion évacué de ladite chambre de combustion (3) à température élevée dans une chaudière (7) de récupération de chaleur ; et
refroidir ledit gaz de combustion en vaporisant un déchet liquide (j) produit par déshydratation desdits déchets en ledit gaz de combustion depuis un dispositif d'alimentation avant que ledit gaz de combustion ne soit introduit dans ladite chaudière de récupération de chaleur.

5. Procédé de combustion par gazéification et scorification selon la revendication 4, dans lequel ladite chambre de combustion (3) à température élevée comprend l'un parmi un incinérateur et un four de combustion par scorification.

6. Procédé de combustion par gazéification et scorification selon la revendication 4, dans lequel lesdits déchets comprennent les déchets comprenant une grande quantité de sels.
